(19) Europäisches Patentamt
European Patent Office
Office européen des brevets

(11) **EP 1 963 600 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **06828711.9**

(22) Anmeldetag: **20.12.2006**

(51) Int Cl.:
**E05B 53/00** *(2006.01)*        **E05B 79/20** *(2014.01)*
**E05B 81/20** *(2014.01)*

(86) Internationale Anmeldenummer:
**PCT/DE2006/002282**

(87) Internationale Veröffentlichungsnummer:
**WO 2007/076826 (12.07.2007 Gazette 2007/28)**

(54) **BOWDENZUGANORDNUNG FÜR EIN KRAFTFAHRZEUGTÜRSCHLOSS**

BOWDEN CABLE ARRANGEMENT FOR A MOTOR VEHICLE DOOR LOCK

ENSEMBLE DE COMMANDE BOWDEN POUR UNE SERRURE DE PORTE D'AUTOMOBILE

(84) Benannte Vertragsstaaten:
**DE FR**

(30) Priorität: **23.12.2005 DE 102005062614**

(43) Veröffentlichungstag der Anmeldung:
**03.09.2008 Patentblatt 2008/36**

(73) Patentinhaber: **Kiekert Aktiengesellschaft**
**42579 Heiligenhaus (DE)**

(72) Erfinder:
• **BECK, Andreas**
**44795 Bochum (DE)**

• **GRAUTE, Ludger**
**45130 Essen (DE)**

(74) Vertreter: **Rohmann, Michael**
**Andrejewski - Honke**
**Patent- und Rechtsanwälte**
**An der Reichsbank 8**
**45127 Essen (DE)**

(56) Entgegenhaltungen:
**EP-A- 1 452 361        EP-A1- 0 989 265**
**DE-A1- 10 064 914     DE-A1- 19 604 724**
**FR-A1- 2 775 717**

EP 1 963 600 B1

**Beschreibung**

Die Erfindung betrifft ein Kraftfahrzeugtürschloss, mit einer rotativ arbeitenden Antriebseinheit, beispielsweise Zuziehhilfe, und mit einem an die Antriebseinheit angeschlossenen flexiblen Antriebsmittel zur Funktionssteuerung, wobei das Antriebsmittel gegenüber einer Basis längenvariabel ausgebildet ist, wobei ferner das Antriebsmittel wenigstens teilweise entlang einer mit der Antriebseinheit zusammenwirkenden Kontur geführt wird, wobei weiter das Antriebsmittel beim Übergang der Antriebseinheit von ihrer Startposition zur Endposition in seiner Länge geändert wird und hauptsächlich gegenüber der Basis eine Richtungsänderung erfährt, und wobei die Kontur nur in einem bestimmten Arbeitsbereich der Antriebseinheit zur Richtungsänderung beiträgt. - In Verbindung mit einem Schließbolzen bildet das Kraftfahrzeugtürschloss wie üblich einen Kraftfahrzeugtürverschluss.

Bei einem Kraftfahrzeugtürschloss des eingangs beschriebenen Aufbaus ist die Antriebseinheit inklusive flexiblem Antriebsmittel als so genannte Zuziehhilfe ausgeführt. Hierbei handelt es sich um das bevorzugte Einsatzgebiet der Erfindung, wenngleich natürlich auch andere Verwendungen denkbar sind und um- fasst werden. Jedenfalls sorgt eine solche Zuziehhilfe dafür, dass ein beispielsweise manuell in Vorrast gebrachtes Türschloss per Zuziehhilfe in die Hauptrast überführt wird. Parallel hierzu wird die zugehörige Kraftfahrzeugtür oder auch Heckklappe in ihre Schließstellung verbracht.

Der Stand der Technik arbeitet hierzu mit einem flexiblen Antriebsmittel, welches mit Hilfe wenigstens einer Umlenkrolle eine Richtungsänderung erfährt. Zusätzlich kann die Umlenkrolle aus ihrer Normalstellung unter Verkürzung des Weges des Antriebsmittels in eine Notöffnungsstellung bewegt werden. Zu diesem Zweck ist die Umlenkrolle an einem Kniehebel angeordnet, welcher sich durch Betätigen einer Notöffnungseinrichtung einknicken lässt. Hierdurch soll eine verbesserte Hilfsöffnung ermöglicht werden (vgl. DE 100 64 914 B4).

Im gattungsbildenden Stand der Technik nach der DE 10 2004 027 419 A1 wird mit einem Entfernungs-Kraftübertragungsmittel zur Verwendung in einem Kraftfahrzeug gearbeitet. Dieses verfügt über ein Zug-/Druckmittel mit antriebsseitigen und abtriebsseitigen Ende. An das antriebsseitige Ende kann ein motorischer Antrieb angeschlossen werden. Mit dem abtriebsseitigen Ende lässt sich beispielsweise ein Betätigungshebel bei einer Sperrklinke beaufschlagen. Am antriebsseitigen Ende sind darüber hinaus Mittel zur Änderung der wirksamen Länge des Hebelarms während der Bewegung des Zug-/Druckmittels vorgesehen. Bei diesen Mitteln zur Änderung der wirksamen Länge des Hebelarms handelt es sich vorliegend um eine Kontur zur Führung des Zug-/Druckmittels.

Da das Aufwickeln des Zug-/Druckmittels nicht mit konstantem Radius erfolgt, wird die wirksame Länge des Hebelarms verändert, vorliegend vergrößert. Dadurch sind Funktionsstörungen bzw. Beschädigungen am Kraftfahrzeugtürschloss möglich.

Der Stand der Technik kann nicht in allen Punkten befriedigen. So ist es oft erforderlich, das mit der Zuziehhilfe beaufschlagte Gesperre des Kraftfahrzeugtürschlosses in eine so genannte Überhubfunktion zu verbringen, um zu gewährleisten, dass die Drehfalle sicher in die Hauptrast einfällt. In dieser Überhubposition muss die Zuziehhilfe meistens gegen die Kraft von mechanischen Anschlägen arbeiten. Dadurch erfährt das Antriebsmittel eine gesteigerte Beaufschlagung, die die Funktionsweise - insbesondere auf großen Zeitskalen - beeinträchtigt. Das kann so weit gehen, dass das Antriebsmittel reißt und übermäßige Kräfte zur Betätigung der Zuziehhilfe erforderlich sind. Hier will die Erfindung insgesamt Abhilfe schaffen.

Der Erfindung liegt das technische Problem zugrunde, ein Kraftfahrzeugtürschloss der eingangs beschriebenen Ausgestaltung so weiter zu entwickeln, dass die erforderlichen Kräfte für die Antriebseinheit verringert sind und die Funktionsfähigkeit ebenso wie die Lebensdauer eine Steigerung erfährt.

Zur Lösung dieser technischen Problemstellung ist ein gattungsgemäßes Kraftfahrzeugtürschloss im Rahmen der Erfindung dadurch gekennzeichnet, dass die Kontur einen durchgängig gleichen Radius aufweist, also überwiegend kreisförmig ausgestaltet ist, wobei der Radius größer als der Abstand des an der Kontur anliegenden Antriebsmittels von einer Drehachse des Anschlusselementes der Antriebseinheit ausgebildet ist, und wobei das Antriebsmittel beim Übergang der Antriebseinheit von der Startposition in die Endposition von einem Winkel im Bereich bis ca. +15° gegenüber dem geraden Verlauf bis zu einem Winkel von ca. -15° gegenüber dem geraden Verlauf wechselt.

Üblicherweise weicht das Antriebsmittel in der Startposition und in der Endposition der Antriebseinheit von dem geraden Verlauf ab und zeichnet sich durch einen Schrägverlauf aus. Dieser Schrägverlauf ist mit der Winkelabweichung gegenüber dem geraden Verlauf von bis zu 15° verbunden. Insbesondere wird eine Winkelabweichung von bis zu ca. 10°, vorzugsweise von bis zu ca. 7°, beobachtet. Dabei wechselt das Antriebsmittel beim Übergang der Antriebseinheit von der Startposition in die Endposition erfindungsgemäß von dem Winkel im Bereich bis ca. +15° gegenüber dem geraden Verlauf hin zu dem Winkel von ca. -15° gegenüber dem geraden Verlauf. Das heißt, der insgesamt zwischen der Startposition und Endposition eingeschlossene Winkel des Antriebsmittels kann Werte bis zu ca. 30° annehmen, wobei insbesondere Werte bis zu ca. 20° beobachtet werden. Das Antriebsmittel ändert also nur seine Richtung gegenüber der Basis und wird ansonsten überwiegend nicht ab- oder umgelenkt.

Der Arbeitsbereich, in welchem die Kontur ggf. zusätzlich zur Richtungsänderung beiträgt, korrespondiert üblicherweise zum Überhubbereich beim Zuziehen einer Drehfalle. Dabei ist die Kontur mit dem Radius ausgerüstet, welcher größer als der Abstand des an der Kontur anliegenden Antriebsmittels im Vergleich zur Drehachse für die Antriebseinheit bzw. ein Anschlusselement der Antriebseinheit ist. In diesem Zusammenhang hat es sich bewährt, wenn der besagte Radius um wenigstens 20 % größer als der vorerwähnte Abstand ist. Insbesondere werden sogar Werte von mehr als 50 %, und vorzugsweise solche von mehr als 70 % beobachtet, um welche der Radius größer als der betreffende Abstand zwischen dem Antriebsmittel und der Drehachse ausgestaltet ist.

In dem beschriebenen Fall verfügt die Kontur über einen durchgängig gleichen Radius, ist also überwiegend kreisförmig ausgestaltet. Es ist aber auch möglich, mit einer Kontur mit exzentrischer Kurvenführung zu arbeiten, wobei dann nur im Bereich der Exzentrizität die vorerwähnten Radienverhältnisse beobachtet werden.

Um eine kompakte Bauweise zu erreichen, verfügen die Kontur und die Antriebseinheit regelmäßig über eine gemeinsame Drehachse. Zusätzlich mag ein Anschlusselement für ein Ende des Antriebsmittels realisiert sein. Dabei können die Kontur und das besagte Anschlusselement eine Baueinheit bilden, um die Fertigungskosten so gering wie möglich zu halten. Das andere Ende des Antriebsmittels ist demgegenüber entweder direkt an das Gesperre des Kraftfahrzeugtürschlosses angeschlossen oder an einen beispielsweise die Drehfalle direkt beaufschlagenden Übertragungshebel. Das gilt jedenfalls solange, wie die Antriebseinheit inklusive Antriebsmittel als Zuziehhilfe für das Kraftfahrzeugtürschloss ausgeführt ist. Denn selbstverständlich sind auch andere Einsatzzwecke denkbar und werden von der Erfindung umfasst.

Dabei mögen die Antriebseinheit inklusive Antriebsmittel in das Kraftfahrzeugtürschloss integriert sein. Üblicherweise sind jedoch die Antriebseinheit und das Antriebsmittel baulich von dem Kraftfahrzeugtürschloss respektive einem zugehörigen Gehäuse getrennt ausgelegt. Um an dieser Stelle die Montage zu vereinfachen, ist das Antriebsmittel an seinem der Antriebseinheit zugehörigen Ende in das besagte Anschlusselement eingehängt. Hierbei hat es sich bewährt, wenn die Kontur zusätzlich noch einen Fortsatz als Verriegelungsnase für das besagte Ende des Antriebsmittels aufweist. Dadurch wird verhindert, dass sich das in das Anschlusselement eingehängte Antriebsmittel hiervon lösen kann.

Im Ergebnis wird ein Kraftfahrzeugtürschloss mit einer Antriebseinheit inklusive Antriebsmittel zur Verfügung gestellt, die extern angebracht oder in das Kraftfahrzeugtürschloss integriert sein kann. Die Antriebseinheit inklusive Antriebsmittel mag als Zuziehhilfe für das im Innern des Kraftfahrzeugtürschlosses befindliche Gesperre aus Drehfalle und Sperrklinke fungieren, kann aber auch andere Funktionen übernehmen.

Dadurch, dass mit der rotativen Beaufschlagung der Antriebseinheit verbundene Richtungsänderungen des Antriebsmittels erfindungsgemäß auf ein Minimum begrenzt werden, lässt sich die erforderliche Antriebskraft besonders vor teilhaft steuern. Hierzu trägt insbesondere der Umstand bei, dass die Kontur im Überhubbereich mit einem vergrößerten Radius im Vergleich zum Abstand der Drehachse der Kontur zum anliegenden Antriebsmittel ausgerüstet ist. Denn hierdurch wird die endseitig an dem Antriebsmittel zur Verfügung stehende Kraft verkleinert, weil der Hebelarm die beschriebene Verlängerung erfährt. Gleichzeitig reduziert dieser Kunstgriff die Gefahr von Beschädigungen oder von einem Reißen des Antriebsmittels und wird gleichzeitig die Geräuschentwicklung der Antriebseinheit inklusive Antriebsmittel positiv beeinflusst. Als langfristige Folgen stellen sich eine hohe Funktionssicherheit und eine lange Lebensdauer ein, die bisher vom Stand der Technik nicht zu erreichen waren.

Dabei mag das Antriebsmittel nicht einschränkend als Bowdenzug ausgeführt sein. Denn selbstverständlich werden von der Erfindung auch Varianten dergestalt umfasst, dass an dieser Stelle mit einem simplen Seilzug ohne zusätzliche Schutzhülle wie bei einem Bowdenzug gearbeitet wird. Der Seilzug oder auch die Seele des Bowdenzuges mögen jeweils als Stahlseile oder auch Kunststoffseile aus mehreren einzelnen Adern ausgeführt sein. Das ist jedoch nicht zwingend.

Im Folgenden wird die Erfindung anhand lediglich ein Ausführungsbeispiel darstellender Zeichnungen näher erläutert; es zeigen:

Fig. 1    das erfindungsgemäße Kraftfahrzeugtürschloss schematisch in Startposition,

Fig. 2    den Gegenstand nach Fig. 1 mit in Vorrast befindlichem Gesperre,

Fig. 3    den Übergang des angeschlossenen Kraftfahrzeugtürschlosses von der Vorrast nach Fig. 2 zur Hauptrast in der Fig. 4,

Fig. 4    die bereits angesprochene Hauptraststellung des Kraftfahrzeugtürschlosses und die dazu gehörige Position der Antriebseinheit inklusive Antriebsmittel,

Fig. 5    den Gegenstand nach den Fig. 1 bis 4 in Überhubstellung und

Fig. 6    ein Kraft-/Wegdiagramm mit dem erfindungsgemäßen Verlauf (durchgezogen) und dem bisherigen Kraftverlauf (gestrichelt),

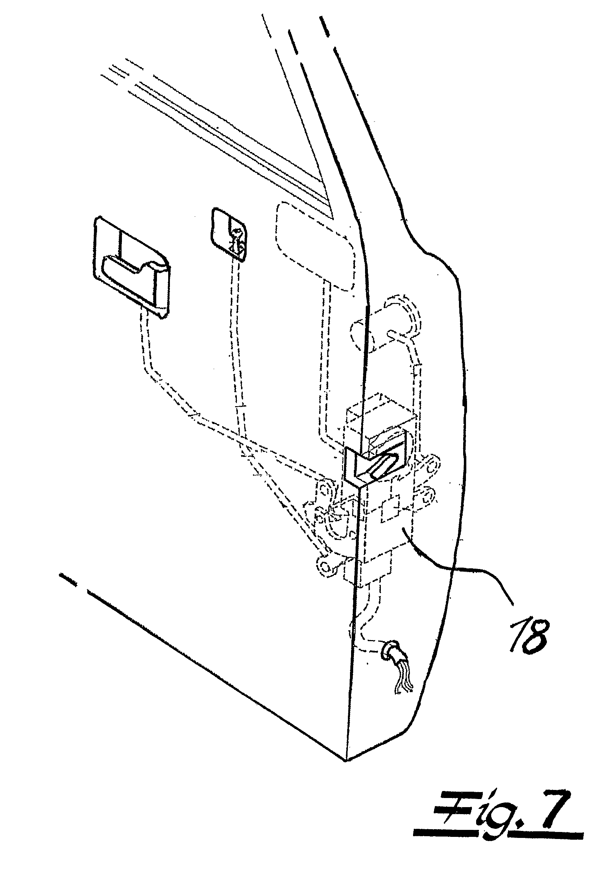

Fig. 7    den Gegenstand nach Fig. 1 bis Fig. 6 in seiner Anordnung in der Kraftfahrzeugtür.

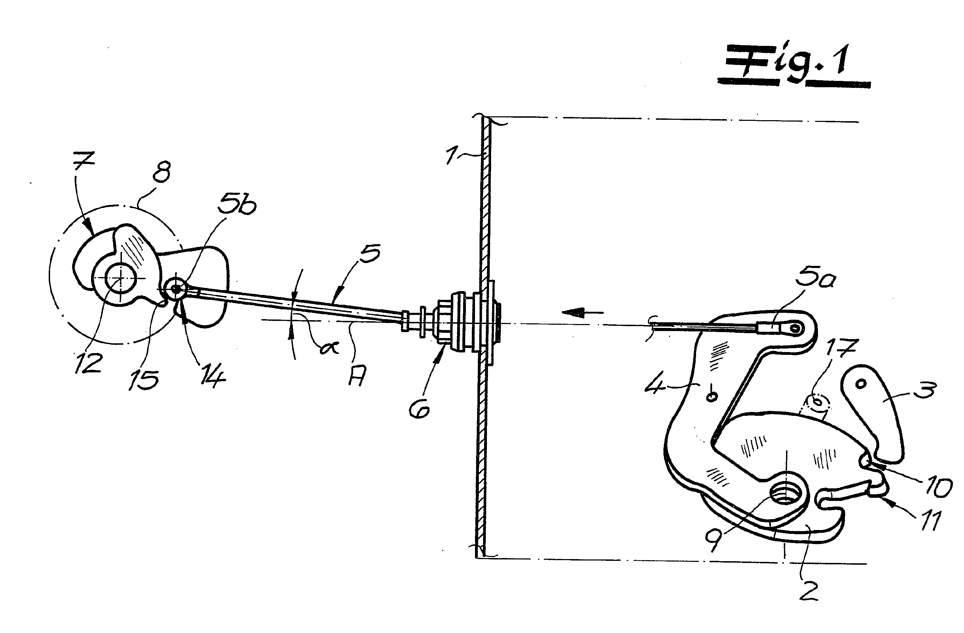

In den Figuren ist ein Kraftfahrzeugtürschloss 18 dargestellt, von dem die für die Erfindung wesentlichen Bauteile lediglich in der Fig. 1 angedeutet sind. Tatsächlich erkennt man ein Gehäuse 1 des Kraftfahrzeugtürschlosses 18, in welchem eine Drehfalle 2 drehbar gelagert ist, die mit einer lediglich angedeuteten Sperrklinke 3 zusammenwirkt und ein Gesperre 2, 3 bildet. Auf die Drehfalle 2 arbeitet ein daran angeschlossener Übertragungshebel 4, an welchen seinerseits die Seele 5 eines Bowdenzuges 5, 6 angeschlossen ist. Bei dem Bowdenzug 5, 6 handelt es sich im Rahmen des Ausführungsbeispiels um ein flexibles Antriebsmittel 5, 6, welches an eine Antriebseinheit 7, 8 angeschlossen ist, um Funktionen des Kraftfahrzeugtürschlosses 18 zu steuern. Im Rahmen des Ausführungsbeispiels und nicht einschränkend handelt es sich bei diesen Funktionen um das Zuziehen des Gesperres 2, 3.

Zu diesem Zweck wird die Seele 5 des Bowdenzuges 5, 6 entsprechend der Pfeilrichtung in Fig. 1 von der Antriebseinheit 7, 8 beaufschlagt, so dass die Drehfalle 2 um ihre Achse 9 im Gegenuhrzeigersinn verschwenkt wird und als Folge hiervon die Sperrklinke 3 zunächst in eine Vorrast 10 und anschließend in eine Hauptrast 11 einfällt. Um dies zu erreichen, ist das Antriebsmittel 5, 6 gegenüber einer Basis 1 längenvariabel ausgebildet. Bei der Basis 1 handelt es sich im Ausführungsbeispiel um das Gehäuse 1 des Kraftfahrzeugtürschlosses 18. Es könnte aber auch irgendein anderer ortsfester Bestandteil des Kraftfahrzeugtürschlosses 18 als Basis 1 gewählt werden.

Die Längenänderungen des Antriebsmittels 5, 6 erkennt man beim Vergleich der Fig. 1 bis 5. Tatsächlich ist das eine Ende 5a des Antriebsmittels 5, 6 bzw. die Seele 5 des Bowdenzuges 5, 6 an den besagten Übertragungshebel 4 angeschlossen, während das andere Ende 5b in ein Anschlusselement 7 der Antriebseinheit 7, 8 eingehängt ist. Tatsächlich weist die Antriebseinheit 7, 8 einen (elektromotorischen) Antriebsmotor 8 auf, welcher rotativ auf das Anschlusselement 7 arbeitet. Anschlusselement 7 und Antriebsmotor 8 sind um eine gemeinsame Achse 12 drehbar gelagert. Ebenfalls um diese Achse 12 drehbar gelagert ist eine Kontur 13.

Die Kontur 13 formt im Rahmen des Ausführungsbeispiels und nicht einschränkend zusammen mit dem Anschlusselement 7 für das Ende 5b des Antriebsmittels 5, 6 eine Baueinheit 7, 13. Auf diese Baueinheit 7, 13 arbeitet der Antriebsmotor 8 entweder direkt - wie dargestellt - oder über ein nicht gezeigtes Übertragungselement, beispielsweise einen Zahnriemen oder dergleichen.

Zur Aufnahme des Endes 5b des Antriebsmittels 5, 6 im Anschlusselement 7 ist das Anschlusselement 7 mit einer Aufnahme 14 ausgerüstet. Zusätzlich weist die Kontur 13 einen Fortsatz 15 auf, welcher als Verriegelungsnase für das in die Aufnahme 14 des Anschlusselementes 7 eingehängte Ende 5b des Antriebsmittels 5, 6 ausgestaltet ist.

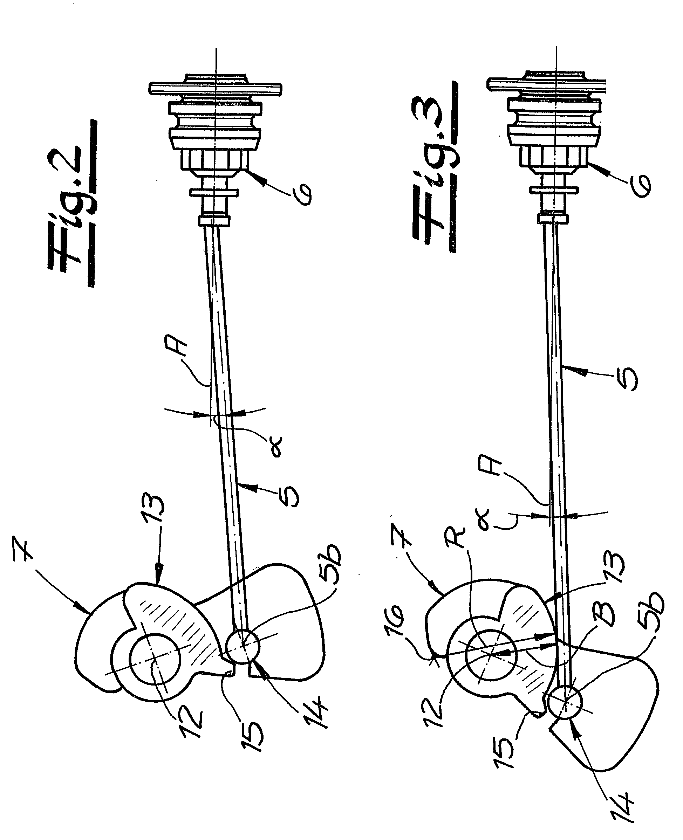

Man erkennt, dass das Antriebsmittel 5, 6 respektive die Seele 5 des Bowdenzuges 5, 6 wenigstens teilweise entlang der mit der Antriebseinheit 7, 8 zusammenwirkenden Kontur 13 geführt wird. Tatsächlich liegt das Antriebsmittel 5, 6 zu Beginn der Funktionsstellung nach der Fig. 3 an der besagten Kontur 13 an. Das heißt, die Seele 5 des Bowdenzuges 5, 6 berührt die Kontur 13 bei in der Hauptraststellung befindlichen Gesperre 2, 3 sowie kurz davor.

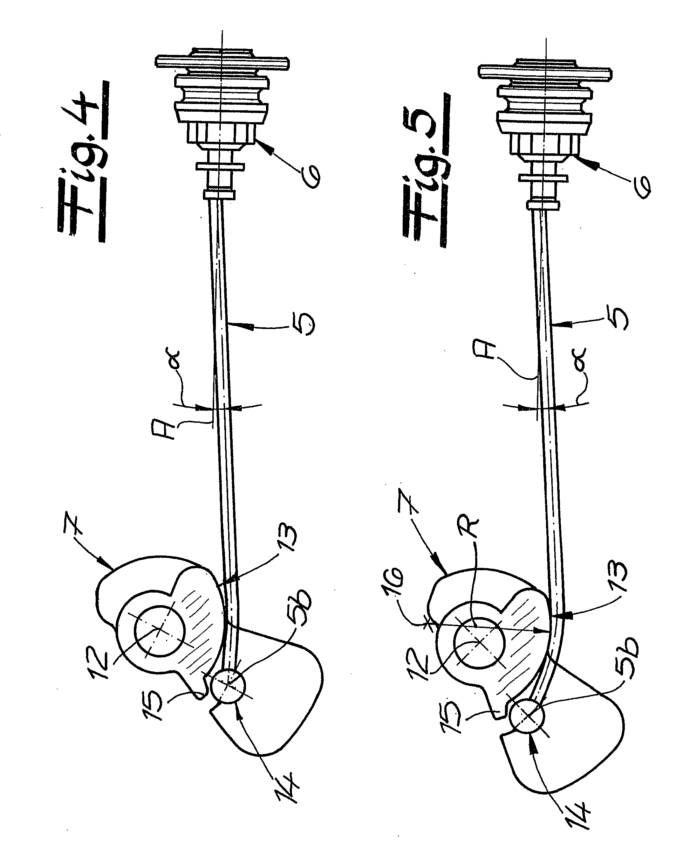

Beim Übergang der Antriebseinheit 7, 8 von ihrer Startposition in der Fig. 1 zur Endposition entsprechend der Fig. 4 respektive in der Fig. 5 wird das Antriebsmittel 5, 6 wie gezeigt in seiner Länge geändert. Außerdem erfährt das Antriebsmittel 5, 6 hauptsächlich eine Richtungsänderung gegenüber der Basis 1. Diese Richtungsänderung erkennt man insbesondere im Vergleich zu einer senkrecht zur Basis 1 angeordneten Achse A, welche zum geraden Verlauf des Antriebsmittels 5, 6 bzw. zum senkrechten Verlauf dessen Seele 5 gegenüber dem Gehäuse 1 und der daran abgestützten Umhüllung 6 des Bowdenzuges 5, 6 korrespondiert. Gegenüber dieser Achse A nimmt das Antriebsmittel 5, 6 respektive die Seele 5 des Bowdenzuges 5, 6 eine Schrägstellung bzw. einen Schrägverlauf von ca. +5° in der Fig. 1 und ca. -5° in den Fig. 4 und 5 ein. Dazu gehört ein jeweiliger Winkel $\alpha$, welcher den Schrägverlauf dokumentiert. Es sind auch abweichende Winkel $\alpha$ im Bereich von bis zu ca. 15° denkbar und werden von der Erfindung umfasst.

Zusätzlich erkennt man, dass die Kontur 13 im Wesentlichen nicht zur Richtungsänderung beiträgt. Das heißt, die Seele 5 des Bowdenzuges 5, 6 bzw. das Antriebsmittel 5, 6 behält im Wesentlichen seinen (ihren) Schrägverlauf bei, wie der Übergang von der Fig. 1 zur Fig. 2 und weiter zu den Fig. 3 und 4 deutlich macht. Erst in einem bestimmten Arbeitsbereich der Antriebseinheit 7, 8 trägt die besagte Kontur 13 zur Richtungsänderung bei, nämlich im so genannten Überhubbereich, den die Fig. 5 darstellt. Hiermit ist gemeint, dass das Gesperre 2, 3 über die Hauptrast 11 hinaus im Gegenuhrzeigersinn um ihre Achse 9 in der Fig. 1 gedreht wird, und zwar bis ein lediglich angedeuteter Anschlag 17 im Gehäuse 1 des Kraftfahrzeugtürschlosses 18 erreicht ist. Der Anschlag 17 mag als Gummianschlag ausgeführt sein. Es sind aber auch andere Lösungen denkbar, um den Überhub zu realisieren, beispielsweise durch ein nicht gezeigtes Schaltelement, welches beim Erreichen der Überhubstellung den Antriebsmotor 8 ausschaltet und somit die Antriebseinheit 7, 8 insgesamt stoppt. Jedenfalls sorgt der Überhub dafür, dass die Drehfalle 2 sicher in die Hauptrast 11 überführt wird bzw. die Sperrklinke 3 funktionssicher in die Hauptrast 11 einfallen kann.

Damit insbesondere im Überhubbereich keine übermäßigen Kräfte von der Antriebseinheit 7, 8 auf das Antriebsmittel 5 aufgebracht werden, verfügt die Kontur 13 über einen Radius R, welcher durch einen von der Drehachse 12 beabstandeten Drehpunkt 16 für die Kontur 13 definiert wird. Der Radius R ist größer als ein Abstand B von der besagten Drehachse 12 bis zu der an der Kontur 13 anliegenden Seele 5 des Bowdenzuges 5, 6 bzw. des Antriebsmittels 5, 6. Tatsächlich gilt:

$$R \geq 1{,}2\ B.$$

Besonders bevorzugt sind Relationen von

$$R \geq 1{,}5\ B\ \text{bis}\ R \geq 1{,}7\ B.$$

Auf diese Weise kann von der Antriebseinheit 7, 8 mit der insbesondere im Überhubbereich zusätzlich an dem Antriebsmittel 5, 6 angreifenden Kontur 13 keine übermäßig große Kraft auf das Antriebsmittel 5, 6 ausgeübt werden. Dadurch sind die am Antriebsmittel 5, 6 angreifenden Kräfte gegenüber bisherigen Ausgestaltungen verringert, wie die Fig. 5 deutlich macht. Anders ausgedrückt, ist die Antriebseinheit 7, 8 mit im Vergleich zu bisherigen Ausgestaltungen dennoch in der Lage, aufgrund der durch die Kontur 13 verringerten Antriebskraft dennoch das Gesperre 2, 3 zuverlässig gegen den Anschlag 17 zu fahren, so dass die Sperrklinke 3 sicher in die Hauptrast 11 einfällt. - Dabei kann die Kontur 13 auch nur im Bereich einer exzentrischen Ausbildung mit dem vorerwähnten Radius R ausgerüstet sein und ansonsten mit kleineren Radien R arbeiten. In diesem Zusammenhang muss natürlich gewährleistet werden, dass die nicht dargestellte Exzentrizität zumindest im Überhubbereich des Gesperres 2, 3 zum Tragen kommt.

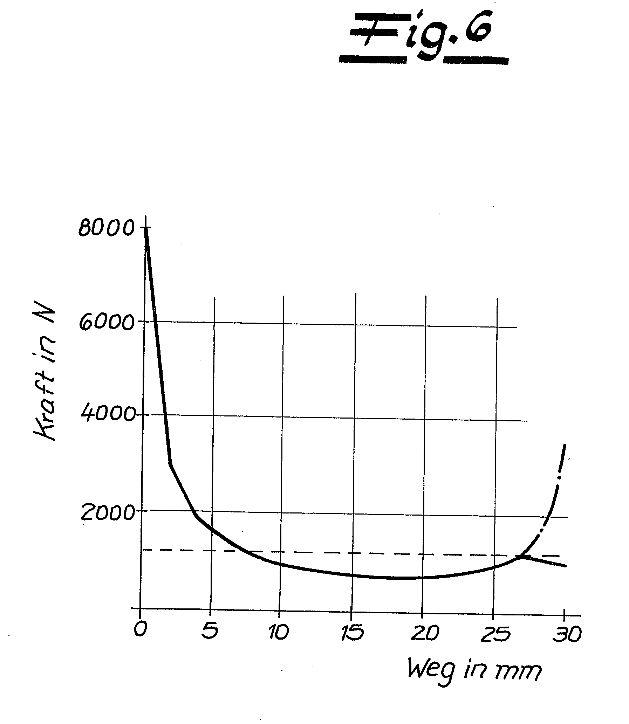

In der Fig. 5 erkennt man eine zunächst theoretisch hohe Kraft am Antriebsmittel 5, 6 in der Startposition, sobald die Antriebseinheit 7, 8 bzw. der Antriebsmotor 8 rotativ im Uhrzeigersinn beim Übergang von der Fig. 1 zur Fig. 2 beaufschlagt wird. Diese Kraft sinkt und nähert sich einem horizontalen Verlauf beim Übergang von der Fig. 2 zur Fig. 3 bis hin schließlich zur Fig. 4. Dann im Überhubbereich nach der Fig. 5 steigt die am Antriebsmittel 5, 6 angreifende Kraft geringfügig an, und zwar weniger als dies beim Stand der Technik ohne zusätzliche Kontur 13 beobachtet wird. Denn der Stand der Technik profitiert nicht von der mit der Kontur 13 verbundenen Kraftreduzierung durch den gesteigerten Radius R. Das macht der durchgezogene Verlauf am Ende des Weges des Antriebsmittels 5, 6 in der Fig. 6 im Vergleich zum strichpunktierten Verlauf nach dem Stand der Technik deutlich.

**Patentansprüche**

1. Kraftfahrzeugtürschloss, mit einer rotativ arbeitenden Antriebseinheit (7, 8), beispielsweise Zuziehhilfe (7, 8), und mit einem an die Antriebseinheit (7, 8) angeschlossenen flexiblen Antriebsmittel (5, 6) zur Funktionssteuerung, wobei

    - das Antriebsmittel (5, 6) gegenüber einer Basis (1) längenvariabel ausgebildet ist, wobei ferner

    - das Antriebsmittel (5, 6) wenigstens teilweise entlang einer mit der Antriebseinheit (7, 8) zusammenwirkenden Kontur (13) geführt wird, wobei weiter

    - das Antriebsmittel (5, 6) beim Übergang der Antriebseinheit (7, 8) von ihrer Startposition zur Endposition in seiner Länge geändert wird und hauptsächlich gegenüber der Basis (1) eine Richtungsänderung (Winkel α) erfährt, und wobei

    - die Kontur (13) nur in einem bestimmten Arbeitsbereich der Antriebseinheit (7, 8) zur Richtungsänderung beiträgt,

    **dadurch gekennzeichnet, dass**

    - die Kontur (13) einen durchgängig gleichen Radius (R) aufweist, also überwiegend kreisförmig ausgestaltet ist, wobei

    - der Radius (R) größer als der Abstand (B) des an der Kontur (13) anliegenden Antriebsmittels (5, 6) von einer Drehachse (12) des Anschlusselementes (7) der Antriebseinheit (7, 8) ausgebildet ist, und wobei

    - das Antriebsmittel (5, 6) beim Übergang der Antriebseinheit (7, 8) von der Startposition in die Endposition von einem Winkel im Bereich bis ca. +15° gegenüber dem geraden Verlauf bis zu einem Winkel von ca. -15° gegenüber dem geraden Verlauf wechselt.

2. Kraftfahrzeugtürschloss nach Anspruch 1, **dadurch gekennzeichnet, dass** das Antriebmittel (5, 6) in der Startposition und in der Endposition der Antriebseinheit (7, 8) einen von einem geraden Verlauf abweichenden Schrägverlauf (Winkel α) aufweist.

3. Kraftfahrzeugtürschloss nach Anspruch 2, **dadurch gekennzeichnet, dass** der Schrägverlauf (Winkel α) gegenüber dem geraden Verlauf eine Winkelabweichung von bis zu ca. 15°, insbesondere bis zu ca. 10°, vorzugsweise ca. 7°, aufweist.

4. Kraftfahrzeugtürschloss nach einem der Ansprüche 1 bis 3, **dadurch gekennzeichnet, dass** der Arbeitsbereich, in welchem die Kontur (13) zusätzlich zur Richtungsänderung beiträgt, zu dem Überhubbereich beim Zuziehen einer Drehfalle (2) korrespondiert.

5. Kraftfahrzeugtürschloss nach Anspruch 1 bis 4, **dadurch gekennzeichnet, dass** der Radius (R) der Kontur (13) um mindestens 20 % größer als der Abstand (B) ist, insbesondere mehr als 50 %, und vorzugsweise mehr als 70 % größer als der Abstand (B) ist.

6. Kraftfahrzeugtürschloss nach einem der Ansprüche 1 bis 5, **dadurch gekennzeichnet, dass** die Kontur (13) und das Anschlusselement (7) die gemeinsame Drehachse (12) aufweisen.

7. Kraftfahrzeugtürschloss nach einem der Ansprüche 1 bis 6, **dadurch gekennzeichnet, dass** die Kontur (13) zusammen mit einem Anschlusselement (7) der Antriebseinheit (7, 8) für ein Ende (5b) des Antriebsmittels (5, 6) eine Baueinheit (7, 13) bilden.

8. Kraftfahrzeugtürschloss nach einem der Ansprüche 1 bis 7, **dadurch gekennzeichnet, dass** das Antriebsmittel (5, 6) an seinem einen Ende (5b) in das Anschlusselement (7) eingehängt ist.

9. Kraftfahrzeugtürschloss nach einem der Ansprüche 1 bis 8, **dadurch gekennzeichnet, dass** die Kontur (13) einen Fortsatz (15) als Verriegelungsnase für das eine Ende (5b) des Antriebsmittels (5, 6) aufweist.

**Claims**

1. Motor vehicle door lock, with a rotary operating drive unit (7, 8), for example a closing aid (7, 8), and with a flexible drive (5, 6) means connected to the drive unit (7, 8) for controlling the functions thereof, wherein

   - the drive means (5, 6) is constructed so as to have a length that is variable relative to a base (1), and wherein
   - at least part of the drive means (5, 6) passes along a contour (13) that cooperates with the drive unit (7, 8), wherein further
   - the length of the drive means (5, 6) is changed and undergoes a change in direction (angle $\alpha$) mainly relative to the base (1) during the transition of the drive unit (7, 8) from the starting position to the final position thereof, and wherein
   - the contour (13) only contributes to the change of direction of the drive unit (7, 8) within a certain working range

   **characterised in that**

   - the contour (13) has a consistently uniform radius (R), that is to say it is substantially circular, wherein
   - the radius (R) is greater than the distance (B) between the drive means (5, 6) adjacent to the contour (13) and an axis of rotation (12) of the connecting element (7) of the drive unit (7, 8), and wherein
   - the angle of alignment of the drive means (5, 6) changes from a range of approximately +15° relative to a straight line to a range of approximately -15° relative to a straight line when the drive unit (7, 8) is shifted from its start position to its end position.

2. Motor vehicle door lock, according to claim 1, **characterised in that** the drive means (5, 6) is deflected from a straight course (angle $\alpha$) when the drive unit (7, 8) is in both the starting position and the end position.

3. Motor vehicle door lock, according to claim 2, **characterised in that** deflected course (angle $\alpha$) has an angular deviation of up to about 15°, particularly up to about 10°, preferably about 7° relative to the straight course.

4. Motor vehicle door lock according to any one of claims 1 to 3, **characterised in that** the working area in which the contour (13) also contributes to the change of direction corresponds to the overtravel area when closing a rotary latch (2).

5. Motor vehicle door lock according to any one of claims 1 to 4, **characterised in that** the radius (R) of contour (13) is at least 20% greater than the distance (B), particular more than 50%, and preferably more than 70% greater than distance (B).

6. Motor vehicle door lock according to any one of claims 1 to 5, **characterised in that** the contour (13) and the connecting element (7) have the common axis of rotation (12).

7. Motor vehicle door lock according to any one of claims 1 to 6, **characterised in that** the contour (13) together with a connecting element (7) of the drive unit (7, 8) form a structural unit (7, 13) for an end (5b) of drive means (5, 6).

8. Motor vehicle door lock according to any one of claims 1 to 7, **characterised in that** one end (5b) of drive means (5, 6) is clasped inside the connecting element (7).

9. Motor vehicle door lock according to any one of claims 1 to 8, **characterised in that** the contour (13) has a protrusion (15) as a locking lug for one end (5b) of drive means (5, 6).

**Revendications**

1. Serrure de porte de véhicule automobile avec une unité d'entraînement fonctionnant de façon rotative (7,8), par exemple assistance à la fermeture (7,8) et avec un moyen d'entraînement (5,6) flexible raccordé à l'unité d'entraînement (7,8) pour la commande de fonctionnement,

- le moyen d'entraînement (5,6) étant constitué variable en longueur par rapport à une base (1),
- le moyen d'entraînement (5,6) étant en outre guidé au moins en partie le long d'un contour (13) coopérant avec l'unité d'entraînement (7,8),
- le moyen d'entraînement (5,6) étant par ailleurs modifié dans sa longueur lors du passage de l'unité d'entraînement (7,8) de sa position de départ à la position finale et subissant une modification de direction (angle $\alpha$) principalement par rapport à la base (1), et
- le contour (13) ne contribuant à la modification de direction, que dans une certaine zone de travail de l'unité d'entraînement (7,8),

**caractérisée en ce que**

- le contour (13) comporte un rayon (R) généralement égal, et est donc configuré essentiellement de forme circulaire,
- le rayon (R) plus grand que la distance (B) du moyen d'entraînement (5,6) attenant au contour (13) étant constitué d'un axe de rotation (12) de l'élément de raccordement (7) de l'unité d'entraînement (7,8), et
- le moyen d'entraînement (5,6) changeant, lors du passage de l'unité d'entraînement (7,8) de la position de départ à la position finale, d'un angle allant jusqu'à environ +15° par rapport au tracé droit jusqu'à un angle d'environ -15° par rapport au tracé droit.

2. Serrure de porte de véhicule automobile selon la revendication 1, **caractérisée en ce que** le moyen d'entraînement (5,6) dans la position de départ et dans la position finale de l'unité d'entraînement (7,8) présente une allure oblique (angle $\alpha$) s'écartant d'un tracé droit.

3. Serrure de porte de véhicule automobile selon la revendication 2, **caractérisée en ce que** l'allure oblique (angle $\alpha$) comporte par rapport au tracé droit un écart angulaire allant jusqu'à environ 15°, en particulier jusqu'à environ 10°, de préférence environ 7°.

4. Serrure de porte de véhicule automobile selon l'une quelconque des revendications 1 à 3, **caractérisée en ce que** la zone de travail dans laquelle le contour (13) contribue en plus à la modification de direction correspond à la zone de surcourse lors de la fermeture d'un loquet rotatif (2).

5. Serrure de porte de véhicule automobile selon la revendication 1 à 4, **caractérisée en ce que** le rayon (R) du contour (13) est d'au moins 20% plus grand que la distance (B), et est en particulier plus grand de 50% et de préférence plus grand de 70% que la distance B.

6. Serrure de porte de véhicule automobile selon l'une quelconque des revendications 1 à 5, **caractérisée en ce que** le contour (13) et l'élément de raccordement (7) comportent l'axe de rotation commun (12).

7. Serrure de porte de véhicule automobile selon l'une quelconque des revendications 1 à 6, **caractérisée en ce que** le contour (13) avec un élément de raccordement (7) de l'unité d'entraînement (7,8) forment une unité modulaire (7,13) pour une extrémité (5b) du moyen d'entraînement (5,6).

8. Serrure de porte de véhicule automobile selon l'une quelconque des revendications 1 à 7, **caractérisée en ce que** le moyen d'entraînement (5,6) est accroché dans l'élément de raccordement (7) à son extrémité (5b).

9. Serrure de porte de véhicule automobile selon l'une quelconque des revendications 1 à 8, **caractérisée en ce que** le contour (13) comporte un prolongement (15) en tant qu'ergot de verrouillage pour une extrémité (5b) du moyen d'entraînement (5,6).

Fig. 1

_Fig.2_

_Fig.3_

Fig.4

Fig.5

EP 1 963 600 B1

*Fig.6*

18

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10064914 B4
- DE 102004027419 A1